# FASCICULE DE BREVET EUROPEEN

(11) **EP 1 476 321 B1**
(45) Date de publication et mention de la délivrance du brevet: **12.09.2007**
(21) Numéro de dépôt: 03726972.7
(22) Date de dépôt: 02.01.2003
(51) Int. Cl.: B60C 25/138

(54) **DISPOSITIF DE MONTAGE D'UN PNEU SUR UNE JANTE DE VEHICULE**
VORRICHTUNG ZUM MONTIEREN EINES REIFENS AN EINER FAHRZEUGFELGE
DEVICE FOR MOUNTING A TYRE ON A VEHICLE RIM

(30) Priorité: 27.12.2001 EP 01000795
(43) Date de publication de la demande: 17.11.2004
(73) Titulaire: Ghyselinck N.V., 8210 Zedelgem (BE)
(72) Inventeur: GHYSELINCK, Willy, B-8210 Zedelgem (BE)
(74) Mandataire: Gevers, François
(86) Numéro de dépôt international: PCT/BE2003/000001
(87) Numéro de publication internationale: WO 2003/055703

(56) Documents cités:
- EP-A- 0 482 701
- US-A- 4 800 944

## Description

La présente invention se rapporte à un dispositif de montage d'un pneu sur une jante de véhicule. Un tel dispositif comprend un premier moyen agencé pour recevoir la jante et la disposer en position de montage du pneu, un bras dont une première extrémité est munie d'une tête de montage du pneu sur la jante, ladite tête étant agencée de manière rotative autour de son axe de symétrie et un deuxième moyen connecté à la seconde extrémité du bras et agencé pour imprimer audit bras un mouvement de révolution autour de l'axe de symétrie de la jante en position de montage du pneu. Un tel dispositif est connu de US 4 800 944.

Chaque flanc d'un pneu comprend au niveau de son bord intérieur audit pneu un bourrelet généralement circulaire, comprenant un câble souvent métallique et destiné à être monté sur un rebord ou siège correspondant présent à la périphérie intérieure de chaque flanc d'une jante. Le diamètre du bourrelet en question est généralement légèrement inférieur à celui de la jante de sorte que le bourrelet doit être forcé sur le rebord correspondant de la jante, afin d'assurer le maintien en place du pneu lors du roulement de la roue comprenant ledit pneu monté sur sa jante sur une chaussée. La tête de montage d'un dispositif de montage d'un pneu sur sa jante assure cette fonction de forçage du bourrelet de chaque flanc du pneu sur le rebord de la jante correspondant. Cette tête peut consister en un élément fixe ou mobile, généralement disposé à une l'extrémité d'un bras de montage d'un dispositif de montage d'un pneu sur une jante de véhicule et d'une forme adaptée au forçage en question.

Un dispositif de montage d'un pneu sur sa jante selon l'état de la technique est connu de EP482701. Ce document décrit un dispositif destiné notamment au montage d'un pneu sur une jante de véhicule et de démontage de ce pneu de sa jante, dans lequel le bras portant la tête de montage est fixe et le moyen agencé pour recevoir la jante et la disposer en position de montage est rotatif. Le bras portant la tête de montage est selon ce document disposé verticalement, son axe étant parallèle à celui de la jante en position de montage du pneu.

Dans le cadre d'une chaîne industrielle de première monte de pneus sur leurs jantes, celles-ci sont amenées au dispositif de montage par un moyen de transport, par exemple un convoyeur. Lors de ce transport, le pneu correspondant à chaque jante est déposé en biais sur celle-ci, de manière telle que ses flancs sont obliques relativement au plan de convoyage de la jante et qu'une portion du pneu est le plus proche du convoyeur alors que la portion diamétralement opposée en est le plus éloigné. Un pneu arrivant dans cette position au dispositif de montage peut gêner le mouvement de révolution d'un bras vertical muni de la tête de montage autour de l'axe de symétrie de la jante, perturbant ainsi le montage de ce pneu sur ladite jante.

L'invention résout ce problème en proposant un dispositif de montage d'un pneu sur une jante de véhicule, dans lequel ledit bras est incliné sur l'axe de symétrie de la jante en position de montage du pneu, d'un angle aigu, la première extrémité du bras étant ainsi la plus éloignée de l'axe de symétrie de la jante en position de montage du pneu.

Grâce à cette configuration particulière du bras du dispositif selon l'invention, celui-ci décrit une surface de révolution conique tronquée durant son mouvement de montage du pneu sur sa jante, la base de cette surface étant constituée par la courbe décrite par la tête de montage durant ce mouvement. Au contraire, un le bras vertical d'un dispositif selon l'état de la technique décrit une surface de révolution cylindrique de même base. Par conséquent, le mouvement du bras du dispositif selon l'invention ne sera pas entravé par le position de biais du pneu sur la jante lorsqu'elle arrive audit dispositif dans des circonstances ou il l'aurait été avec un bras vertical selon l'état de la technique. De plus, la position inclinée du bras permet un positionnement du bourrelet du flanc du pneu le plus proche du convoyeur sur le rebord ou siège correspondant de la jante sans que le bourrelet du flanc du pneu le plus éloigné du convoyeur ne gène ce positionnement et tout en empêchant que ce dernier bourrelet ne soit lui-même positionné sur le rebord ou siège correspondant de la jante à un moment inopportun, pendant le positionnement du bourrelet le plus proche du convoyeur.

Des formes de réalisation préférées de l'invention sont décrites dans les revendications secondaires.

L'invention va à présent être décrite plus en détails et à titre d'exemple non limitatif de la porté de cette dernière, au regard des figures jointes, dans lesquelles:
La fig. 1a représente une vue de profil d'un dispositif selon l'invention;
la fig. 1b représente une vue de face du bras du dispositif illustré à la fig. 1a, muni de sa tête de montage de pneu ;
la fig. 2a représente un vue de profil d'un premier moyen agencé pour recevoir une jante et la disposer en position de montage d'un pneu dans un dispositif selon l'invention;
la fig. 2b représente une vue du dessus du premier moyen illustré à la fig. 2a ;
la fig. 2c représente une vue en perspective éclatée d'une portion du premier moyen illustré aux fig. 2a et 2b.

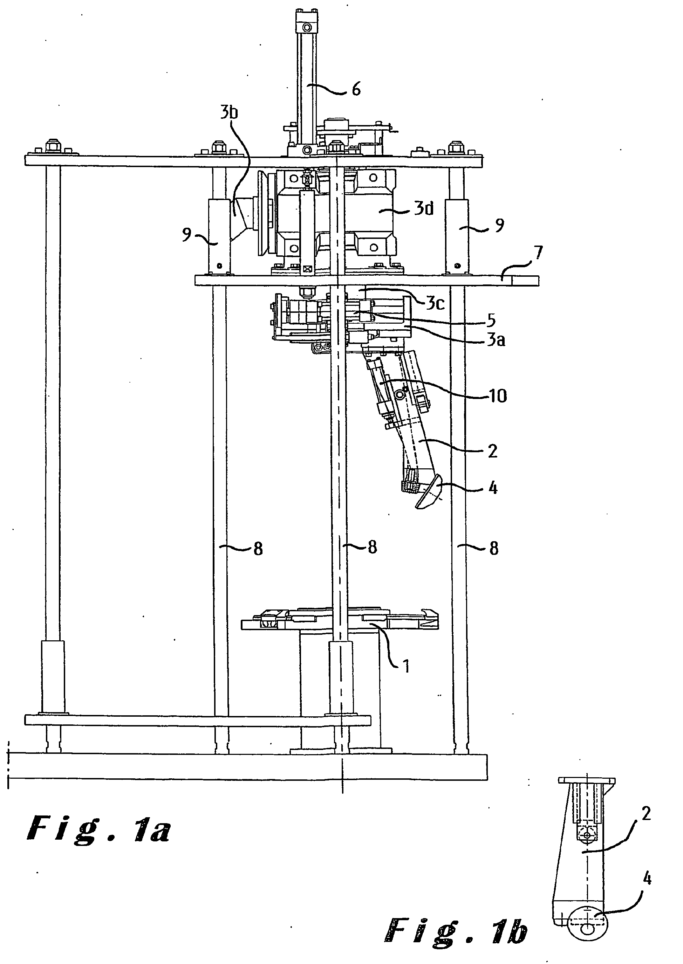

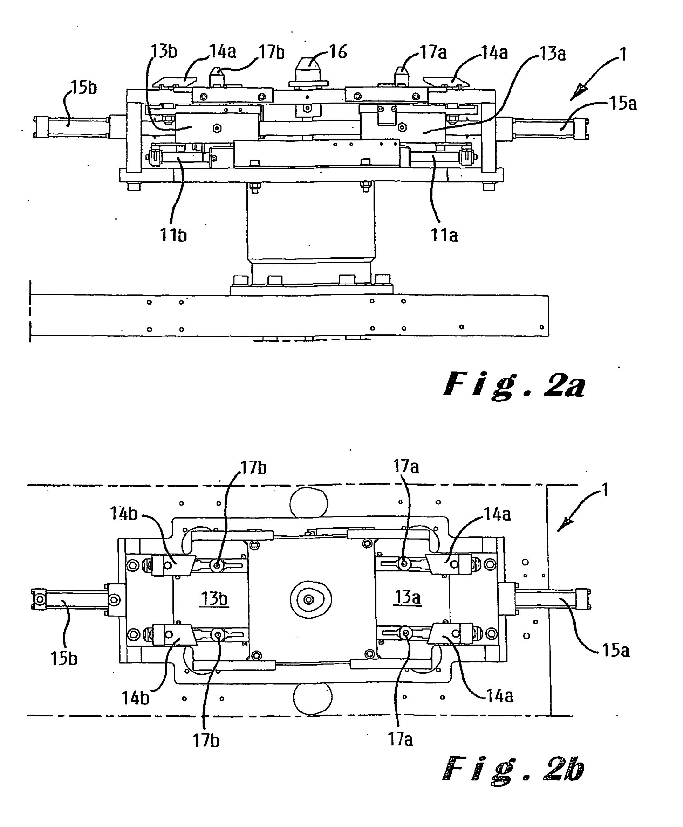

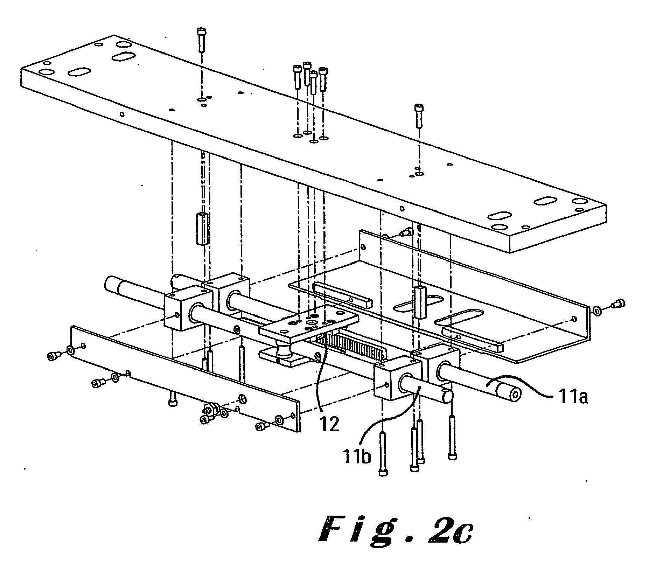

La figure 1a représente un dispositif de montage d'un pneu sur une jante de véhicule selon l'invention, ce dispositif comprenant un premier moyen 1 agencé pour recevoir la jante amenée au dispositif par un convoyeur (non représenté) et la disposer en position de montage du pneu. Ce premier moyen est illustré plus en détails aux figures 2a à 2c. Le dispositif comprend en outre un bras 2 dont une première extrémité est munie d'une tête de montage 4 de pneu. La seconde extrémité du bras 2 est connectée à un deuxième moyen 3a, 3b, 3c, 3d agencé pour imprimer au bras 2 un mouvement de révolution autour de l'axe de symétrie de la jante lorsqu'elle est disposée en position de montage du pneu sur le premier moyen 1. Le deuxième moyen 3a, 3b, 3c, 3d comprend une plate-forme 3a à laquelle est connectée la seconde extrémité du bras 2, un moteur 3b agencé pour entraîner le bras 2 dans ledit mouvement de révolution, cet entraînement étant réalisé par l'intermédiaire d'un axe de rotation 3c reliant le moteur 3b à la plate-forme 3a par l'intermédiaire d'un élément 3d de réduction de la vitesse du moteur 3b et de conversion de son mouvement en mouvement rotatif de l'axe 3c. Eventuellement, le moteur 3b peut être en prise directe sur l'axe 3c. Le bras 2 est incliné d'un angle aigu d'environ 14° relativement à l'axe de symétrie de la jante en position de montage du pneu, de sorte que la première extrémité du bras 2 soit plus éloignée de l'axe de symétrie de la jante en position de montage du pneu que la première extrémité dudit bras 2. De la sorte, le mouvement de ce bras 2 pendant le montage d'un pneu sur sa jante n'est pas entravé par la disposition de biais du pneu sur ladite jante lorsque celle-ci est amenée au dispositif par un convoyeur (non représenté). Le dispositif selon l'invention comprend également un troisième moyen 5 agencé pour déplacer le bras 2 orthogonalement à l'axe de symétrie de la jante en position de montage d'un pneu. Ce troisième moyen peut comprendre un vérin hydraulique ou tout moyen alternatif assurant la même fonction. En agissant sur le troisième moyen 5, on peut ajuster de manière continue la position de la tête de montage 4 et en particulier régler la distance qui la sépare de l'axe de symétrie susmentionné, de manière à permettre au dispositif de s'adapter au montage de pneus sur des jantes de différents diamètres, allant jusqu'à 24 pouces, voire davantage, toute dimension commerciale de jante étant traitable par ce dispositif, en adaptant le diamètre du parcours de rotation de la tête 4 à celui de la jante sur laquelle un pneu doit être monté. Alternativement, le troisième moyen 5 permet également de faire varier la distance de la tête 4 relativement à l'axe de symétrie de la jante en position de montage d'un pneu pendant le mouvement de révolution de ladite tête 4 autour dudit axe, de manière à ce que la tête 4 décrive une courbe de révolution non circulaire mais par exemple elliptique ou ovoïde, afin de s'adapter au montage de pneus sur tous types de jantes, même non circulaires ainsi que de monter un bourrelet d'un pneu sur un rebord ou siège de sa jante sans risque d'abîmer une surface de ce bourrelet et en particulier la surface recouverte de toile qu'il présente généralement du côté de ce bourrelet intérieur au pneu. Le dispositif est en outre pourvu d'un quatrième moyen 6 agencé pour déplacer le bras 2 parallèlement à l'axe de symétrie de la jante en position de montage du pneu. Ce quatrième moyen peut comprendre un vérin hydraulique ou tout moyen alternatif assurant la même fonction. Le quatrième moyen 6 peut déplacer un plateau 7 muni de cylindres de coulissement 9 agencés pour coulisser le long de montants 8 sensiblement parallèles à l'axe de symétrie de la jante en position de montage du pneu. Le plateau 7 porte l'ensemble constitué du bras 2 ainsi que des deuxième 3a-3d et troisième 5 moyens. Ainsi, il est possible de régler en continu la hauteur de la tête de montage 4 d'un pneu sur sa jante en fonction de la largeur de celle-ci. Un tel déplacement permet également à ladite tête 4 de monter un premier bourrelet périphérique d'un premier flanc de pneu sur un premier rebord périphérique ou siège correspondant d'une jante puis d'être déplacée verticalement vers le haut ou le bas pour venir monter le second bourrelet périphérique du second flanc du pneu en question sur le second rebord périphérique ou siège de ladite jante. Le bras 2 est pourvu d'un cinquième moyen 10, pouvant comprendre un rouleau pouvant tourner autour de son axe sensiblement parallèle au bras 2, agencé pour orienter un bourrelet du pneu à monter sur sa jante selon un angle déterminé de sorte d'une part que ce bourrelet ne reste pas accroché à la tête de montage 4 et d'autre part que l'étirement du câble interne au bourrelet lors du montage du pneu sur sa jante soit réduit à un minimum. Ceci prévient la rupture du câble de pneu en question. La tête de montage 4 a sensiblement la forme d'un cône tronqué ou d'un hémisphère tronqué dont l'axe de symétrie est incliné, d'un angle d'environ 62°, sur l'axe de symétrie de la jante en position de montage du pneu, la base de ladite tête étant dès lors inclinée d'un angle d'environ 28° sur cet axe de symétrie. Le dispositif selon l'invention, grâce aux différents ajustages de la tête de montage 4 qu'il permet est très polyvalent et permet de traiter tous types de jantes et de pneus dans des délais très brefs, à la fois de montage d'un pneu sur une jante et de passage d'un format de jante et/ou de pneu à un autre.

Le dispositif selon l'invention comprend du reste également une unité de contrôle programmable (non représentée) agencée pour recevoir des informations relatives au type de jante, de pneu et de valve dudit pneu à monter sur ladite jante et commander en retour la position du bras 2 et de la tête 4 pendant le montage du pneu sur la jante.

Les figures 2a-2c illustrent en détails un premier moyen d'un dispositif selon l'invention, agencé pour recevoir une jante et la disposer en position de montage d'un pneu sur cette jante. Ce premier moyen comprend un premier et un second axe parallèles crantés respectivement 11a et 11b accouplés par une roue dentée 12 et disposés sous le plan de réception de ladite jante dans le dispositif de montage. Les axes 11 a et 11 b sont agencés de sorte que le déplacement de l'un dans une direction entraîne celui de l'autre dans la direction opposée. Chacun desdits axes 11a et 11b est relié par l'intermédiaire d'un bloc de transmission, respectivement 13a et 13b à une paire de clames respectivement 14a et 14b. chaque bloc 13a, 13b est connecté à des sixièmes moyens, respectivement 15a, 15b, pouvant comprendre un vérin hydraulique ou tout autre moyen pouvant assurer la même fonction, agencé pour appliquer au bloc considéré une force dans le sens de l'axe 11 a, 11 b que ledit bloc connecte à la paire de clame considérée et de directions opposées pour déplacer chaque clame dans le sens de l'axe auquel elle est connectée entre une position d'engagement d'un bord périphérique de la jante par chaque clame et de montage du pneu et une position de dégagement dudit bord périphérique par chaque clame une fois ledit pneu monté. De la sorte, une fois qu'une jante est reçue dans le dispositif, elle est disposée en position de montage du pneu par les paires de clames 14a et 14b qui sont déplacées l'une vers l'autre par les blocs qui les portent, dans le sens de l'axe auquel elles sont connectées. Lorsqu'elles entrent en contact de la jante, les paires de clames 14a, 14b lui transmettent la force appliquée par les moyens 15a, 15b aux blocs 13a et 13b et la bloquent dans la sa position de montage du pneu, sans que cette force soit transmise par l'intermédiaire de la roue dentée 12, également appelée pignon de synchronisation. Une fois le montage effectué, le sens des forces appliquées par les moyens 15a, 15b aux blocs 13a, 13b est inversé et les paires de clames 14a et 14b sont écartées l'une de l'autre pour dégager la jante. Le premier moyen agencé pour recevoir une jante et la disposer en position de montage d'un pneu comprend également un moyeu 16 rétractable sous le plan de réception de la jante, agencé pour engager un orifice central de ladite jante lorsqu'elle est dégagée de sa position de montage du pneu une fois ledit pneu monté sur ladite jante. Ainsi, la jante est maintenue en place lors du dégagement des paires de clames 14a et 14b. Le premier moyen comprend encore deux paires d'ergots, respectivement 17a et 17b rétractables sous le plan de réception de la jante et agencés pour contacter le bord intérieur de la jante en vue de la maintenir en place lorsqu'elle est dégagée de sa position de montage du pneu, une fois ledit pneu monté sur ladite jante. Le mouvement de chaque paire d'ergots, respectivement 17a et 17b est coordonné à celui d'une paire de clames, respectivement 14a, 14b correspondante, un bord périphérique de la jante présente dans le dispositif étant disposé entre une paire d'ergots et la paire de clames correspondante une fois un pneu monté sur sa jante par le dispositif. De la sorte, lorsqu'une paire de clames 14a, 14b se rapproche d'un bord périphérique de la jante, la paire d'ergots correspondante 17a, 17b s'en écarte et inversement. Ainsi, la jante est maintenue en place par les ergots en question une fois le pneu monté et que les paires de clames 14a et 14b s'écartent de la jante, même si celle-ci ne comprend pas d'orifice central pouvant recevoir le moyeu 16.

## Revendications

1. Dispositif de montage d'un pneu sur une jante de véhicule, ledit dispositif comprenant un premier moyen (1) agencé pour recevoir la jante et la disposer en position de montage du pneu, un bras (2) dont une première extrémité est munie d'une tête de montage (4) du pneu sur la jante, ladite tête (4) étant agencée de manière rotative autour de son axe de symétrie, un deuxième moyen (3a, 3b, 3c, 3d) connecté à la seconde extrémité du bras (2) et agencé pour imprimer audit bras un mouvement de révolution autour de l'axe de symétrie de la jante en position de montage du pneu, **caractérisé en ce que** ledit bras (2) est incliné sur l'axe de symétrie de la jante en position de montage du pneu d'un angle aigu, la première extrémité du bras (2) étant ainsi la plus éloignée de l'axe de symétrie de la jante en position de montage du pneu.

2. Dispositif selon la revendication 1, **caractérisé en ce qu'**il comprend un troisième moyen (5) agencé pour déplacer le bras (2) orthogonalement à l'axe de symétrie de la jante en position de montage du pneu et un quatrième moyen (6) agencé pour déplacer le bras (2) parallèlement à l'axe de symétrie de la jante en position de montage du pneu.

3. Dispositif selon l'une quelconque des revendications 1-2, **caractérisé en ce qu'**il comprend un cinquième moyen (10) agencé pour orienter un bourrelet du pneu à monter sur sa jante selon un angle déterminé.

4. Dispositif selon l'une quelconque des revendications 1-3, **caractérisé en ce que** l'axe de rotation de la tête de montage (4) du pneu est incliné sur l'axe de symétrie de la jante en position de montage du pneu d'un angle aigu.

5. Dispositif de montage selon l'une quelconque des 1-4 précédentes, **caractérisé en ce que** le tête de montage (4) du pneu a sensiblement la forme d'un cône tronqué.

6. Dispositif selon l'une quelconque des revendications 1-4, **caractérisé en ce que** la tête de montage (4) du pneu a sensiblement la forme d'un hémisphère tronqué.

7. Dispositif selon l'une quelconque des revendications 1-6, **caractérisé en ce qu'**il comprend une unité de contrôle programmable agencée pour recevoir des informations relatives au type de jante et de pneu à monter et commander en retour la position du bras (2) pendant le montage du pneu sur la jante par le dispositif.

8. Dispositif selon l'une quelconque des revendications précédentes, **caractérisé en ce que** le premier moyen (1) agencé pour recevoir la jante et la disposer en position de montage du pneu comprend un premier (11a) et un second (11b) axe crantés accouplés par une roue dentée (12) et disposés sous le plan de réception de ladite jante, chacun desdits axes (11 a, 11 b) étant connecté par l'intermédiaire d'un bloc de transmission (13a , 13b) à au moins une clame (14a, 14b), chaque bloc de transmission (13a, 13b) étant connecté à des sixièmes moyens (15a, 15b) agencés pour appliquer une force sur ledit bloc (13a, 13b) dans le sens l'axe (11a, 11b) qu'il connecte à chaque clame (14a, 14b) et de directions opposées, pour déplacer chaque clame (14a, 14b) entre une position d'engagement d'un bord périphérique de la jante par chaque clame (14a, 14b) et de montage du pneu et une position de dégagement dudit bord périphérique par chaque clame (14a, 14b) une fois ledit pneu monté sur la jante.

9. Dispositif selon la revendication 8, **caractérisé en ce qu'**il comprend un moyeu (16) agencé pour engager un orifice central de ladite jante lorsqu'elle est dégagée de sa position de montage du pneu une fois ledit pneu monté sur ladite jante.

10. Dispositif selon l'une quelconque des revendications 8-9, **caractérisé en ce que** qu'il comprend au moins deux ergots (17a, 17b) agencés pour contacter le bord intérieur de la jante en vue de la maintenir en place lorsqu'elle est libérée de sa position de montage du pneu une fois ledit pneu monté sur ladite jante.

## Claims

1. A device for mounting a tire on a vehicle rim, said device comprising a first means (1) designed to receive the rim and place it in the tire mounting position, an arm (2), a first end of which is equipped with a head (4) for mounting the tire on the rim, said head (4) being arranged so as to rotate about its axis of symmetry, a second means (3a, 3b, 3c, 3d) connected to the second end of the arm (2) and designed to transmit to said arm a movement of revolution about the axis of symmetry of the rim in the tire mounting position, **characterized in that** said arm (2) is inclined at an acute angle with respect to the axis of symmetry of the rim in the tire mounting position, the first end of the arm (2) thus being furthest away from the axis of symmetry of the rim in the tire mounting position.

2. The device as claimed in claim 1, **characterized in that** it comprises a third means (5) designed to displace the arm (2) orthogonally with respect to the axis of symmetry of the rim in the tire mounting position, and a fourth means (6) designed to displace the arm (2) parallel to the axis of symmetry of the rim in the tire mounting position.

3. The device as claimed in either of claims 1 and 2, **characterized in that** it comprises a fifth means (10) designed to orient at a given angle a bead of the tire that is to be mounted on its rim.

4. The device as claimed in any of claims 1 to 3, **characterized in that** the axis of rotation of the head (4) for mounting the tire is inclined at an acute angle with respect to the axis of symmetry of the rim in the tire mounting position.

5. The device as claimed in any of the preceding claims 1 to 4, **characterized in that** the head (4) for mounting the tire essentially has the shape of a truncated cone.

6. The device as claimed in any of claims 1 to 4, **characterized in that** the head (4) for mounting the tire essentially has the shape of a truncated hemisphere.

7. The device as claimed in any of claims 1 to 6, **characterized in that** it comprises a programmable control unit designed to receive information relating to the type of rim and the type of tire to be mounted, and to control in return the position of the arm (2) during mounting of the tire on the rim by the device.

8. The device as claimed in any of the preceding claims, **characterized in that** the first means (1) designed to receive the rim and place it in the tire mounting position comprises a first (11 a) and a second (11 b) notched spindle which are coupled by a gearwheel (12) and arranged below the plane for receiving said rim, each of said spindles (11a, 11 b) being connected via a transmission block (13a, 13b) to at least one clamp (14a, 14b), each transmission block (13a, 13b) being connected to sixth means (15a, 15b) designed to apply a force to said block (13a, 13b) in the direction of the spindle (11a, 11b) which it connects to each clamp (14a, 14b) and in opposite directions, so as to displace each clamp (14a, 14b) between a position of engagement with a peripheral edge of the rim by each clamp (14a, 14b) and for mounting the tire and a position of disengagement from said peripheral edge by each clamp (14a, 14b) once said tire has been mounted on the rim.

9. The device as claimed in claim 8, **characterized in that** it comprises a hub (16) designed to engage a central orifice of said rim when it is released from its tire mounting position once said tire has been mounted on said rim.

10. The device as claimed in either of claims 8 and 9, **characterized in that** it comprises at least two pins (17a, 17b) designed to contact the inner edge of the rim with a view to holding it in place when it is released from its tire mounting position once said tire has been mounted on said rim.

## Patentansprüche

1. Vorrichtung zur Montage eines Reifens auf einer Felge eines Kraftfahrzeugs, umfassend ein erstes Mittel (1), das derart angeordnet ist, dass es die Felge aufnimmt und diese in Position zur Montage des Reifens anordnet, einen Arm (2), dessen erstes Ende mit einem Montagekopf (4) für den Reifen auf der Felge versehen ist, wobei der Kopf (4) drehbar um seine Symmetrieachse angeordnet ist, ein zweites Mittel (3a, 3b, 3c, 3d), das an das zweite Ende des Arms (2) angeschlossen und derart angeordnet ist, dass es dem Arm eine Drehbewegung um die Symmetrieachse der Felge in Montageposition des Reifens verleiht, **dadurch gekennzeichnet, dass** der Arm (2) auf die Symmetrieachse der Felge in Montageposition des Reifens um einen spitzen Winkel geneigt ist, wobei das erste Ende des Arms (2) somit am weitesten von der Symmetrieachse der Felge in Montageposition des Reifens entfernt ist.

2. Vorrichtung nach Anspruch 1, **dadurch gekennzeichnet, dass** sie ein drittes Mittel (5), das derart angeordnet ist, dass es den Arm (2) orthogonal zur Symmetrieachse der Felge in Montageposition des Reifens verschiebt, und ein viertes Mittel (6) umfasst, das derart angeordnet ist, dass es den Arm (2) parallel zur Symmetrieachse der Felge in Montageposition des Reifens verschiebt.

3. Vorrichtung nach einem der Ansprüche 1 - 2, **dadurch gekennzeichnet, dass** sie ein fünftes Mittel (10) umfasst, das derart angeordnet ist, dass es einen Wulst des auf seiner Felge zu montierenden Reifens in einem bestimmten Winkel ausrichtet.

4. Vorrichtung nach einem der Ansprüche 1 - 3, **dadurch gekennzeichnet, dass** die Drehachse des Montagekopfes (4) des Reifens auf die Symmetrieachse der Felge in Montageposition des Reifens um einen spitzen Winkel geneigt ist.

5. Montagevorrichtung nach einem der vorhergehenden Ansprüche 1 - 4, **dadurch gekennzeichnet, dass** der Montagekopf (4) des Reifens im Wesentlichen die Form eines Kegelstumpfes hat.

6. Vorrichtung nach einem der Ansprüche 1 - 4, **dadurch gekennzeichnet, dass** der Montagekopf (4) des Reifens im Wesentlichen die Form einer kegelstumpfartigen Halbkugel hat.

7. Vorrichtung nach einem der Ansprüche 1 - 6, **dadurch gekennzeichnet, dass** sie eine programmierbare Kontrolleinheit umfasst, die derart angeordnet ist, dass sie Informationen über den Felgentyp und den zu montierenden Reifentyp empfängt und rückwirkend die Position des Arms (2) während der Montage des Reifens auf der Felge durch die Vorrichtung steuert.

8. Vorrichtung nach einem der vorhergehenden Ansprüche, **dadurch gekennzeichnet, dass** das erste Mittel (1), das derart angeordnet ist, dass es die Felge aufnimmt und diese in Montageposition des Reifens anordnet, eine erste (11a) und eine zweite (11b) Zahnachse umfasst, die durch ein Zahnrad (12) gekoppelt und unter der Aufnahmeebene der Felge angeordnet sind, wobei jede der Achsen (11a, 11 b) mit Hilfe eines Übertragungsblocks (13a, 13b) an mindestens eine Spannpratze (14a, 14b) angeschlossen ist, wobei jeder Übertragungsblock (13a, 13b) an sechste Mittel (15a, 15b) angeschlossen ist, die derart angeordnet sind, dass eine Kraft an den Block (13a, 13b) in Richtung der Achse (11a, 11 b), die er an jede Spannpratze (14a, 14b) anschließt, und in entgegen gesetzte Richtungen anlegt, um jede Spannpratze (14a, 14b) zwischen einer Position zum Eingriff eines Umfangsrandes der Felge durch jede Spannpratze (14a, 14b) und zur Montage des Reifens und einer Position zur Freigabe des Umfangsrandes durch jede Spannpratze (14a, 14b) zu verschieben, wenn der Reifen auf der Felge montiert ist.

9. Vorrichtung nach Anspruch 8, **dadurch gekennzeichnet, dass** sie eine Nabe (16) umfasst, die derart angeordnet ist, dass sie in eine Mittelöffnung der Felge eingreift, wenn sie aus ihrer Montageposition des Reifens freigegeben ist, wenn der Reifen auf der Felge montiert ist.

10. Vorrichtung nach einem der Ansprüche 8 - 9, **dadurch gekennzeichnet, dass** sie mindestens zwei Haken (17a, 17b) umfasst, die derart angeordnet sind, dass sie mit dem Innenrand der Felge in Kontakt treten, um sie an Ort und Stelle zu halten, wenn sie aus ihrer Montageposition des Reifens freigegeben wird, wenn der Reifen auf der Felge montiert ist.
